# EUROPEAN PATENT APPLICATION

(11) **EP 1 868 143 A1**
(43) Date of publication of application: **19.12.2007**
(21) Application number: 07252418.4
(22) Date of filing: 14.06.2007
(51) Int. Cl.: G06N 5/02

(54) **Information object creation based on an optimized test procedure method and apparatus**

(30) Priority: 14.06.2006 US 452240
(71) Applicant: SPX Corporation, Charlotte, NC 28277 (US)
(72) Inventor: Underdal, Olay M., Kalamazoo Michigan 49009 (US); Portyanko, Oleksiy, Portage Michigan 49024 (US); Fountain, Gregory J., Kalamazoo Michigan 49004 (US); Gilbert, Harry M., Portage Michagan 49024 (US); Mayes, Randy L., Otsego Michigan 49078 (US); Wittliff, William W., III, Gobles Michigan (US)
(74) Representative: Hedges, Martin Nicholas

(57) **Abstract**

An information object generator gathers and organizes information corresponding to an optimized static diagnostic test procedure from a diverse set of information sources and dynamically produces a static information object organized in a sequence or data structure that corresponds to the optimized diagnostic test procedure. The information object generator defines a vehicle component taxonomy, fault taxonomy, diagnostic taxonomy, repair taxonomy and information taxonomy. The information object generator then imports a diagnostic test sequence and associates relevant information to each test step or diagnostic procedure in the sequence to create an information object that corresponds to the diagnostic test sequence. The information object generator further instantiates the information object for presentation to a user while being guided through the diagnostic test sequence or independent of the diagnostic test sequence.

## Description

### FIELD OF THE INVENTION

The present invention relates generally to diagnostic equipment. More particularly, the present invention relates to the generation of information objects based on optimized diagnostic test plans, such as vehicle diagnostic test plans.

### BACKGROUND OF THE INVENTION

Diagnostic systems are used by technicians and professionals in virtually all industries to perform basic and advanced system testing functions. For example, in the automotive, trucking, heavy equipment and aircraft industries, diagnostic test systems provide for vehicle onboard computer fault or trouble code display, interactive diagnostics, multiscope and multimeter functions and electronic service manuals. In the medical industry, diagnostic systems provide for monitoring body functions and diagnosis of medical conditions, as well as system diagnostics to detect anomalies in the medical equipment.

In many industries, diagnostic systems play an increasingly important role in manufacturing processes, as well as in maintenance and repair throughout the lifetime of the equipment or product. Some diagnostic systems are based on personal computer technology and feature user-friendly, menu-driven diagnostic applications. These systems assist technicians and professionals at all levels in performing system diagnostics on a real-time basis.

A typical diagnostic system includes a display on which instructions for diagnostic procedures are displayed. The system also includes a system interface that allows the operator to view real-time operational feedback and diagnostic information. Thus, the operator may view, for example, vehicle engine speed in revolutions per minute, or battery voltage during start cranking; or a patient's heartbeat rate or blood pressure. With such a system, a relatively inexperienced operator may perform advanced diagnostic procedures and diagnose complex operational or medical problems.

However, a technician may at times prefer to access detailed information relating to the diagnostic procedures. This can require that the technician consult a variety of different hardcopy or electronic technical manuals, which typically are not organized in a sequence that corresponds to the diagnostic procedures. As a result, diagnostic testing can sometimes consume unnecessary time and cost, because the technician is required to consult multiple information sources that are not organized in a sequence that corresponds to the diagnostic procedures. Accordingly, it is desirable to provide a method and apparatus for generating an information object that contains information from a diverse set of information sources organized in a sequence that corresponds to an optimized diagnostic test plan that can be executed on diagnostic systems.

### SUMMARY OF THE INVENTION

The foregoing needs are met, to a great extent, by the present invention, wherein in one aspect an apparatus and method are provided that in some embodiments provide for generating an optimized diagnostic test plan that can be executed on a diagnostic system.

In accordance with one aspect of the present invention, a computer-implemented method of dynamically producing an information object based on an optimized diagnostic test sequence can include reading an optimized diagnostic test sequence related to a symptom, where the diagnostic test sequence includes a first diagnostic test. The method can further include associating a first information segment with the first diagnostic test.

In accordance with another aspect of the present invention, a computer program product for dynamically producing an information object based on an optimized diagnostic test sequence, having a computer-readable medium encoded with instructions configured to be executed by a processor in order to perform predetermined operations including reading an optimized diagnostic test sequence related to a symptom, the diagnostic test sequence including a first diagnostic test. The predetermined operations can further include associating a first information segment with the first diagnostic test.

In accordance with yet another aspect of the present invention, a diagnostic tool for dynamically producing an information object based on an optimized diagnostic test sequence can include a diagnostic test sequence reader configured to read an optimized diagnostic test sequence related to a symptom, the diagnostic test sequence including a first diagnostic test. The diagnostic tool can further include an information associator configured to associate a first information segment with the first diagnostic test.

In accordance with still another aspect of the present invention, a diagnostic tool for dynamically producing an information object based on an optimized diagnostic test sequence can include means for reading an optimized diagnostic test sequence related to a symptom, the diagnostic test sequence including a first diagnostic test. The diagnostic tool can further include means for associating a first information segment with the first diagnostic test.

There has thus been outlined, rather broadly, certain embodiments of the invention in order that the detailed description thereof herein may be better understood, and in order that the present contribution to the art may be better appreciated. There are, of course, additional embodiments of the invention that will be described below and which will form the subject matter of the claims appended hereto.

In this respect, before explaining at least one embodiment of the invention in detail, it is to be understood that the invention is not limited in its application to the details of construction and to the arrangements of the components set forth in the following description or illustrated in the drawings. The invention is capable of embodiments in addition to those described and of being practiced and carried out in various ways. Also, it is to be understood that the phraseology and terminology employed herein, as well as the abstract, are for the purpose of description and should not be regarded as limiting.

As such, those skilled in the art will appreciate that the conception upon which this disclosure is based may readily be utilized as a basis for the designing of other structures, methods and systems for carrying out the several purposes of the present invention. It is important, therefore, that the claims be regarded as including such equivalent constructions insofar as they do not depart from the spirit and scope of the present invention.

### BRIEF DESCRIPTION OF THE DRAWINGS

FIG. 1 is a schematic diagram illustrating an information object generator according to a preferred embodiment of the invention.

FIG. 2 illustrates a representative tree graph representation of a data structure that can be produced by the information object generator.

FIG. 3 is a flowchart illustrating steps that may be followed in accordance with one embodiment of the method or process of generating an information object that corresponds to an optimized diagnostic test plan.

FIG. 4 is a flowchart illustrating steps that may be followed in accordance with an alternative embodiment of the method or process of generating an information object that corresponds to an optimized diagnostic test plan.

### DETAILED DESCRIPTION

When diagnosing a cause of a symptom in any system, the key to accurate diagnosis is obtaining information on system functionality, common problems related to the system, system diagrams, and the like. A lot of the time this information is not readily available in one location. For example, during vehicle diagnostics a repair technician may sometimes be required to consult a variety of different technical references to locate information related to a diagnostic test procedure. Similarly, a medical doctor or technician may sometimes be required to consult a diverse set of references to aid in the diagnosis of a patient.

An embodiment in accordance with the present invention provides an information object generator that can gather and organize information corresponding to an optimized diagnostic test plan from a diverse set of information sources. For example, the information object can include information from technical or medical manuals, technical drawings, wiring schematics, anatomical diagrams, and the like. In addition, the information object can be created using data available from optimized diagnostic procedures, for example, an estimated difficulty, time, or cost required to perform a procedure or repair, statistical probability information based on historical diagnostic results, or the like.

Furthermore, the information object can be organized in a sequence or data structure that corresponds to the optimized diagnostic test plan. Thus, the information object can be interpreted as a dynamically-created manual that has been customized in accordance with a specific optimized diagnostic test plan. The resultant information object can provide valuable, readily-available information to aid a vehicle repair technician, a medical doctor or technician, or the like, during diagnosis and repair, or treatment.

A user can choose to access the information object during execution of the corresponding diagnostic test plan, or at any time during diagnosis and repair, or treatment. Thus, the information object can provide value in diagnosis of the given symptom, and, which presents optimally ordered and structured information concerning a particular problem. The invention will now be described with reference to the drawing figures, in which like reference numerals refer to like parts throughout.

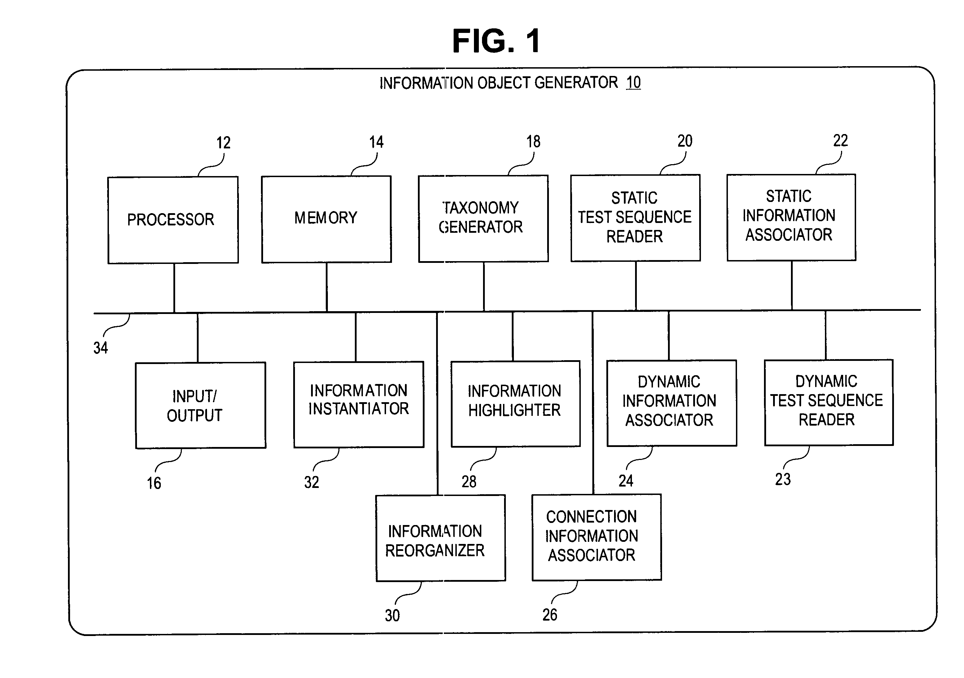

FIG. 1 illustrates an information object generator 10 for use with, for example, a PC-based vehicle diagnostic system to provide instructions for expert diagnostic procedures to allow a vehicle technician to identify the cause of a trouble code or vehicle operational problem at the component level. An embodiment of the information object generator 10 can include a processor 12, a memory 14, an input/output device 16, a taxonomy generator 18, a static test sequence reader 20, a static information associator 22, a dynamic test sequence reader 23, a dynamic information associator 24, a connection information associator 26, an information highlighter 28, an information reorganizer 30 and an information instantiator 32, all of which can be coupled by a data link 34.

The processor 12, the memory 14, and the input/output device 16 can be part of a general computing device, such as a personal computer (PC), a notebook, a UNIX workstation, a server, a mainframe computer, a personal digital assistant (PDA), or some combination of these. Alternatively, the processor 12, the memory 14 and the input/output device 16 can be part of a specialized computing device, such as a vehicle diagnostics scan tool. The remaining components can include programming code, such as source code, object code or executable code, stored on a computer-readable medium that can be loaded into the memory 14 and processed by the processor 12 in order to perform the desired functions of the information object generator 10.

In various embodiments, the information object generator 10 can be coupled to a communication network, which can include any viable combination of devices and systems capable of linking computer-based systems, such as the Internet; an intranet or extranet; a local area network (LAN); a wide area network (WAN); a direct cable connection; a private network; a public network; an Ethernet-based system; a token ring; a value-added network; a telephony-based system, including, for example, T1 or E1 devices; an Asynchronous Transfer Mode (ATM) network; a wired system; a wireless system; an optical system; a combination of any number of distributed processing networks or systems or the like.

An embodiment of the information object generator 10 can be coupled to the communication network by way of the local data link, which in various embodiments can incorporate any combination of devices-as well as any associated software or firmware-configured to couple processor-based systems, such as modems, network interface cards, serial buses, parallel buses, LAN or WAN interfaces, wireless or optical interfaces and the like, along with any associated transmission protocols, as may be desired or required by the design.

An embodiment of the information object generator 10 can communicate information to the user and request user input by way of an interactive, menu-driven, visual display-based user interface, or graphical user interface (GUI). The user interface can be executed, for example, on a personal computer (PC) with a mouse and keyboard, with which the user may interactively input information using direct manipulation of the GUI. Direct manipulation can include the use of a pointing device, such as a mouse or a stylus, to select from a variety of selectable fields, including selectable menus, drop-down menus, tabs, buttons, bullets, checkboxes, text boxes, and the like. Nevertheless, various embodiments of the invention may incorporate any number of additional functional user interface schemes in place of this interface scheme, with or without the use of a mouse or buttons or keys, including for example, a trackball, a touch screen or a voice-activated system.

The information object generator 10 can produce an information object in relation to the dynamic generation or traversal of an optimized diagnostic test plan. The resulting information object can contain diverse information related to a sequence of diagnostic procedures that comprise the test plan. The information can originate from a variety of different information sources, and can be organized according to the sequence of the optimized diagnostic test plan.

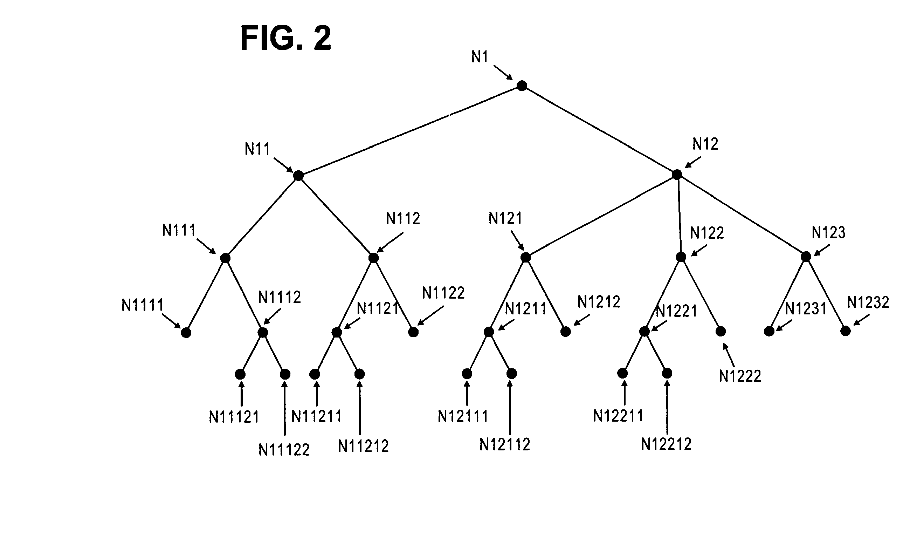

The taxonomy generator 18 can define a component taxonomy corresponding the vehicle, for example, in the form of an connected acyclic directed graph, such as that shown in FIG. 2. Thus, viewing the graph of FIG. 2 as an abstraction of a component taxonomy, each node of the graph can represent a component, CTₙ, of the vehicle. For example, the root node N1 can represent the vehicle as a single unit. Each node connected to the root node N1 can represent a major component of the vehicle. For example, node N11 can represent an engine, and node N12 can represent a transmission. Likewise, each of the connected "sibling" nodes can represent an individual subcomponent. For example, node N111 can represent a fuel control unit, and node N112 can represent an oxygen sensor, and so on.

In association with the component taxonomy, the taxonomy generator 18 can also define a fault taxonomy, by associating one or more failure modes with each component node, FMₙ* = {FMₙ₁, ..., FMₙₘ}. For example, each associated failure mode can describe a specific modality of failure for the component, and the set of failure modes associated with a particular component, FMₙ*, can represent all known ways the particular component can fail.

In addition, the taxonomy generator 18 can define a diagnostic taxonomy by associating at least one failure mode test, FMT_{xy}, with each failure mode, FM_{xy}, which can be interpreted as an elementary diagnostic procedure intended to prove or disprove (conclusively or inconclusively) a hypothesis regarding the presence of a particular failure mode. Furthermore, the taxonomy generator 18 can define a repair taxonomy by associating at least one repair procedure with each failure mode.

Moreover, the taxonomy generator 18 can define an information taxonomy (or service information taxonomy) by associating with each node in the component taxonomy relevant information and documents pertaining to the particular component, as well as connected or otherwise related components.

For example, in the case of a vehicle diagnostic test plan, the information may include, but is not limited to, relevant portions of information such as the following:
- an operation manual
- a repair manual
- a maintenance manual
- an illustrated parts catalog
- a component maintenance manual
- a technical service bulletin
- a recommended maintenance schedule
- a technical drawing
- a wiring diagram
- a diagnostic schematic
- a component description
- a component functional description
- a failure mode explanation
- a photograph
- a vehicle maintenance record
- a service center maintenance record
- a manufacturer warranty record
- a failure mode and affects analysis.

Thus, the information object can include, but is not limited to, information such as the following:
- an estimated time required to perform one or more of the diagnostic test procedures
- a difficulty level of performing the diagnostic test procedures
- an estimated time required to remove and replace a component associated with the diagnostic test procedures
- a difficulty level of removing and replacing a component
- an availability of a replacement component
- an estimated cost of the component
- an actual cost of the component
- an estimated cost of performing the diagnostic test procedures
- empirical data regarding the probability that a failure mode exists given the existence of the symptom
- an estimate of the probability that a failure mode exists given the existence of the symptom
- a frequency or rate of a specific failure mode
- a vehicle mileage
- a vehicle configuration
- a vehicle modification
- a vehicle maintenance record
- a service center maintenance record
- a manufacturer warranty record
- the recommended maintenance schedule for the vehicle, or
- a technical service bulletin.

The static test sequence reader 20 can import or interpret a static diagnostic procedure, for example, a diagnostic procedure in the form of a tree graph, such as that shown in FIG. 2. Viewing the graph of FIG. 2 as an abstraction of a sequence of diagnostic test procedures, each node of the graph can represent a diagnostic test step.

The static diagnostic procedure can be viewed as a derivation of the diagnostic taxonomy that has been optimized for diagnostic efficiency and enhanced with service information for increased diagnostic usability, and can navigate a vehicle technician through a step-by-step test sequence based on a vehicle onboard computer trouble code or a vehicle operational symptom. In addition, the diagnostic procedure can embed the assurance of specific state preconditions of the test vehicle with testing for specific failure conditions, encoded in a static decision tree. During vehicle diagnostics, for example, test step instructions and information can be displayed to the vehicle technician on a display device.

An example of a method of generating a static diagnostic procedure for use with, for example, a PC-based vehicle diagnostic system to provide instructions for expert diagnostic procedures to allow a vehicle technician to identify the cause of a trouble code or vehicle operational problem at the component level is disclosed in U.S. Patent No. 5,631,831, entitled "Diagnosis Method for Vehicle Systems," to *Bird, et al.,* dated May 20, 1997, the disclosure of which is hereby incorporated by reference in its entirety.

In addition, the static information associator 22 can associate information related to each test step with an information node that corresponds to the test step. Thus, relevant service information can be associated with nodes corresponding to the diagnostic procedure to present the user with relevant service information such as wiring diagrams, pictures, component and failure mode explanations, that the user can refer to while being guided through the diagnostic procedure.

The static information associator 22 can thus create an information object in the form of a diagnostic data structure that effectively replaces each diagnostic node, or test step, with an information object node containing all of the information relevant to the corresponding test step from the information taxonomy. For example, viewing the tree graph of FIG. 2 as an abstraction of a data structure composed of information related to a sequence of diagnostic test procedures, each node of the graph can represent a combination of the discrete portions of the information taxonomy that are relevant to the corresponding test step node.

Thus, as a stand-alone entity, the resulting static information object provides a structured organization of the information relevant to understanding a symptom, such as a vehicle ECU trouble code or a generalized system failure symptom. In a general sense, browsing of the static information object can be viewed as a top-down traversal of the corresponding derived fault taxonomy.

The dynamic test sequence reader 23 can import or interpret a dynamic diagnostic procedure, for example, a dynamically optimized diagnostic test plan composed of a sequence of diagnostic tests, or failure mode tests, that have been ordered in an optimized sequence based on estimated or empirically derived probabilities, for example, from a failure mode and effects analysis (FMEA), in order to diagnose the cause of a symptom. The cause of the symptom can correspond to a failure mode of a vehicle component.

A typical FMEA can include a list of failure modes, causes and effects associated with each of the failure modes, a severity of each failure mode, a risk or probability of the occurrence of each failure mode, and additional information that can be useful in designing and manufacturing the associated product. For example, the FMEA can include estimated probability information based on engineering analysis or statistical probability estimates based on empirical data from actual failures. Thus, each diagnostic test procedure can be an individual failure mode test based on the failure modes identified in the FMEA, and the FMEA information can be used to determine which of the diagnostic test procedures is most likely to identify the cause of the symptom.

The dynamic test sequence can be related to the static diagnostic procedure, because, generally speaking, each failure mode test can correspond to a sequence of test steps in a decision tree from the root node to a bottom-level node. For example, referring again to FIG. 2 as a tree graph representation of a static diagnostic procedure, a representative individual failure mode test could proceed along the top-to-bottom path: N1-N11-N111-N1112-N11122. As another example, a second representative failure mode test could proceed along the path: N1-N12-N121-N1212.

An example of a method of generating a dynamic diagnostic test sequence for use with, for example, a PC-based vehicle diagnostic system to provide instructions for expert diagnostic procedures to allow a vehicle technician to identify the cause of a trouble code or vehicle operational problem at the component level is disclosed in copending U.S. Patent Applications, entitled "Dynamic Decision Sequencing Method and Apparatus" and "Diagnostic Test Sequence Optimization Method and Apparatus," filed concurrently herewith by *Fountain, et al.,* the disclosures of which is hereby incorporated by reference in its entirety. The method can dynamically, or "on the fly," construct an optimized decision sequence consisting of elementary tests to confirm the presence of a specific failure mode, while systematically maintaining, or tracking, necessary preconditions.

The dynamic information associator 24 can associate information related to each failure mode test with a corresponding information object node. Thus, relevant service information can be associated with nodes corresponding to the diagnostic test sequence to present the user with relevant service information such as wiring diagrams, pictures, component and failure mode explanations, that the user can refer to while being guided through the diagnostic test sequence.

The dynamic information associator 24 can thus create an independent information object in the form of a diagnostic data structure that corresponds to the sequence of failure mode tests in the dynamic diagnostic test sequence containing all of the information relevant to the corresponding failure mode tests from the information taxonomy. That is, the dynamic information associator 24 can add information object nodes to the information object by, for example, a systematic bottom-up traversal of the fault taxonomy including components that incorporate the subcomponent associated with each specific failure mode addressed by the diagnostic test sequence. Thus, the information object can correspond to a specific dynamic instance of an optimized decision sequence (from an iteration of optimized decision sequences).

The connection information associator 26 can further augment the information object with information object nodes by, for example, a systematic bottom-up traversal of the fault taxonomy including components that are connected to the subcomponent associated with each specific failure mode addressed by the diagnostic test sequence. The resulting dynamic information object can be viewed as a dynamic, specific and optimized reference manual describing at a configurable level of detail all the information pertinent to a specific diagnostic symptom.

Furthermore, the dynamic information object can be organized in a manner that ensures information most likely to explain the root cause is presented first. In a general sense, browsing of the dynamic information object can be viewed as a bottom-up traversal of the corresponding fault taxonomy guided by dynamic reordering based on the relative probabilities of the various component failure modes.

The information highlighter 28 can highlight segments of information, or mark segments for highlighting, for example, as suggested reading. The information reorganizer 30 can receive user feedback regarding viewed or understood segments by way of the input/output device 16 and dynamically reconfigure the information object based on the user feedback. For example, the order of the information can be changed to move information viewed by the user during a previous session to the end, or to omit the viewed information.

The information instantiator 32 can instantiate or format the information object (of either the static or the dynamic type) for publication by suitable presentation templates. For example, the presentation templates can be implemented as style sheets in embodiments that encode the information object in the XML markup language. Thus, the instantiated information object can be abstractly viewed as a specialized reference manual created automatically from the diagnostic procedure.

By viewing the instantiated information object, the user, such as a vehicle technician or a medical doctor or technician, can review information structured for optimized learning and assimilation. The information object structure can aid the user to efficiently diagnose a problem, for example, by avoiding unnecessary review of irrelevant material. The information object can also aid an expert user in efficient review of reference information to aid in independent diagnosis, without stepping through the corresponding diagnostic procedure.

In an alternative embodiment of the information object generator 10, the information instantiator 32 can further present both a top-down and bottom-up information object simultaneously, which would allow the user to be guided by the optimized bottom-up information object, while being able to simultanously refer to traditional top-down structured information to maintain perspective and provide general understanding.

In another alternative embodiment of the information object generator 10, the information instantiator 32 can further transform a diagnostic procedure, for example, a static decision tree or a dynamic decision sequence, using a presentation template for publication in a traditional paper-based, or hardcopy, manual. For example, the information instantiator 32 can produce an abbreviated diagnostic procedure in a paper-based manual with references to detailed reference information in other parts of the manual or in other traditional information sources.

In yet another alternative embodiment, the information object generator 10 can provide a unique reference or link to an Internet-based (or World Wide Web-based) information object generator, which would dynamically assemble an optimized information object as described above.

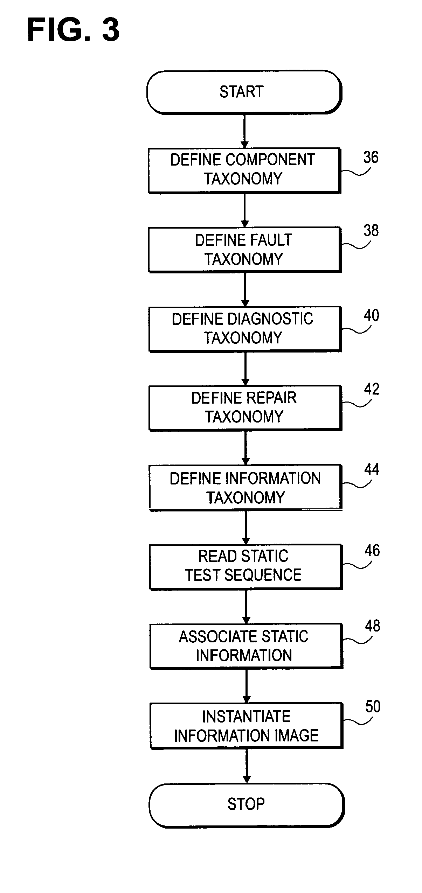

FIG. 3 is a flowchart illustrating a sequence of steps that can performed in order to gather and organize information corresponding to an optimized static diagnostic test procedure from a diverse set of information sources and dynamically produce a static information object organized in a sequence or data structure that corresponds to the optimized diagnostic test procedure. The process can begin by proceeding to step 36, "Define Component Taxonomy," wherein a component taxonomy corresponding the vehicle can be defined. For example, the vehicle can be classified by major components, which in turn can be classified by subcomponents, as explained above.

Then, in step 38, "Define Fault Taxonomy," a fault taxonomy can be defined, for example, by associating one or more failure modes with each component or subcomponent, as explained above. Correspondingly, in step 40, "Define Diagnostic Taxonomy," a diagnostic taxonomy can be defined, for example, by associating at least one failure mode test with each failure mode, as further explained above. Similarly, in step 42, "Define Repair Taxonomy," a repair taxonomy can be defined. That is, for example, at least one repair procedure can be associated with each failure mode, as explained above.

Additionally, in step 44, "Define Information Taxonomy," an information taxonomy (or service information taxonomy) can be defined, for example, by associating with each component relevant information and documents pertaining to the particular component, as well as connected or otherwise related components, as explained above.

Next, in step 46, "Read Static Test Sequence," a static diagnostic procedure can be imported or interpreted, as described above. Subsequently, in step 48, "Associate Static Information," all of the information from the information taxonomy related to each test step in the static diagnostic procedure can be associated with the corresponding test step to create a static information object in the form of a diagnostic data structure that corresponds to the static diagnostic procedure, as described above.

Then, in step 50, "Instantiate Information Image," the static information object can be instantiated or formatted for publication by suitable presentation templates, as explained above. In this way, relevant service information, such as wiring diagrams, pictures, component and failure mode explanations, and the like, can be presented to a user for use while being guided through the diagnostic procedure or independent of the diagnostic procedure.

In alternative embodiments of the method, one or more of steps 36 through 44, "Define Component Taxonomy," "Define Fault Taxonomy," "Define Diagnostic Taxonomy," "Define Repair Taxonomy," and "Define Information Taxonomy," can be omitted. For example, the method may use a predefined component taxonomy, fault taxonomy, diagnostic taxonomy, repair taxonomy, or information taxonomy.

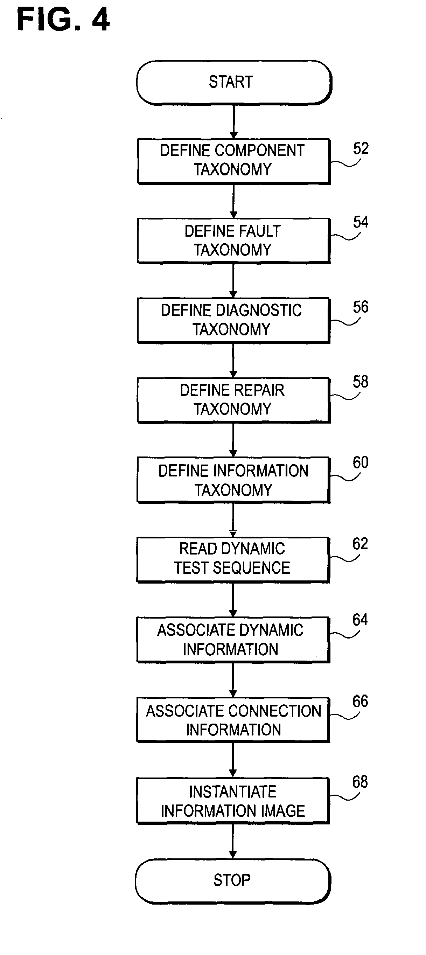

Correspondingly, FIG. 4 is a flowchart illustrating a sequence of steps that can performed in order to gather and organize information corresponding to an optimized dynamic diagnostic test plan from a diverse set of information sources and dynamically produce a dynamic information object organized in a sequence or data structure that corresponds to the optimized dynamic diagnostic test plan. The process can begin by proceeding to step 52, "Define Component Taxonomy," wherein a component taxonomy corresponding the vehicle can be defined. For example, the vehicle can be classified by major components, which in turn can be classified by subcomponents, as explained above.

Then, in step 54, "Define Fault Taxonomy," a fault taxonomy can be defined, for example, by associating one or more failure modes with each component or subcomponent, as explained above. Next, in step 56, "Define Diagnostic Taxonomy," a diagnostic taxonomy can be defined, for example, by associating at least one failure mode test with each failure mode, as further explained above. Similarly, in step 58, "Define Repair Taxonomy," a repair taxonomy can be defined. That is, for example, at least one repair procedure can be associated with each failure mode, as explained above.

Additionally, in step 60, "Define Information Taxonomy," an information taxonomy (or service information taxonomy) can be defined, for example, by associating with each component relevant information and documents pertaining to the particular component, as well as connected or otherwise related components, as explained above.

Next, in step 62, "Read Dynamic Test Sequence," a dynamic diagnostic test plan can be imported or interpreted, as described above. Subsequently, in step 64, "Associate Dynamic Information," all of the information from the information taxonomy related to each failure mode test in the dynamic diagnostic test plan can be associated with the corresponding diagnostic test sequence to create an independent dynamic information object in the form of a diagnostic data structure that corresponds to the sequence of failure mode tests in the dynamic diagnostic test plan, as described above.

Similarly, in step 66, "Associate Connection Information," the dynamic information object can be augmented with relevant information regarding components connected to the subcomponent associated with each specific failure mode addressed by the corresponding diagnostic test sequence, as explained above.

Later, in step 68, "Instantiate Information Image," the dynamic information object can be instantiated or formatted for publication by suitable presentation templates, as explained above. In this way, relevant service information, such as wiring diagrams, pictures, component and failure mode explanations, and the like, can be presented to a user in a sequence based on the likelihood that the information can explain the root cause of a symptom. The dynamic information object can be used by a user while being guided through the diagnostic test plan or independent of the diagnostic test plan.

In alternative embodiments of the method, one or more of steps 52 through 60, "Define Component Taxonomy," "Define Fault Taxonomy," "Define Diagnostic Taxonomy," "Define Repair Taxonomy," and "Define Information Taxonomy," can be omitted. For example, the method may use a predefined component taxonomy, fault taxonomy, diagnostic taxonomy, repair taxonomy, or information taxonomy.

FIGs. 1, 3 and 4 are block diagrams and flowcharts of methods, apparatuses and computer program products according to various embodiments of the present invention. It will be understood that each block or step of the block diagram, flowchart and control flow illustrations, and combinations of blocks in the block diagram, flowchart and control flow illustrations, can be implemented by computer program instructions or other means. Although computer program instructions are discussed, an apparatus according to the present invention can include other means, such as hardware or some combination of hardware and software, including one or more processors or controllers, for performing the disclosed functions.

In this regard, FIG. 1 depicts the apparatus of one embodiment including several of the key components of a general-purpose computer by which an embodiment of the present invention may be implemented. Those of ordinary skill in the art will appreciate that a computer can include many more components than those shown in FIG. 1. However, it is not necessary that all of these generally conventional components be shown in order to disclose an illustrative embodiment for practicing the invention. The general-purpose computer can include a processing unit 12 and a system memory 14, which may include random access memory (RAM) and read-only memory (ROM). The computer also may include nonvolatile storage memory, such as a hard disk drive, where additional data can be stored.

An embodiment of the present invention can also include one or more input or output devices 16, such as a mouse, keyboard, monitor, and the like. A display can be provided for viewing text and graphical data, as well as a user interface to allow a user to request specific operations. Furthermore, an embodiment of the present invention may be connected to one or more remote computers via a network interface. The connection may be over a local area network (LAN) wide area network (WAN), and can include all of the necessary circuitry for such a connection.

Typically, computer program instructions may be loaded onto the computer or other general purpose programmable machine to produce a specialized machine, such that the instructions that execute on the computer or other programmable machine create means for implementing the functions specified in the block diagrams, schematic diagrams or flowcharts. Such computer program instructions may also be stored in a computer-readable medium that when loaded into a computer or other programmable machine can direct the machine to function in a particular manner, such that the instructions stored in the computer-readable medium produce an article of manufacture including instruction means that implement the function specified in the block diagrams, schematic diagrams or flowcharts.

In addition, the computer program instructions may be loaded into a computer or other programmable machine to cause a series of operational steps to be performed by the computer or other programmable machine to produce a computer-implemented process, such that the instructions that execute on the computer or other programmable machine provide steps for implementing the functions specified in the block diagram, schematic diagram, flowchart block or step.

Accordingly, blocks or steps of the block diagram, flowchart or control flow illustrations support combinations of means for performing the specified functions, combinations of steps for performing the specified functions and program instruction means for performing the specified functions. It will also be understood that each block or step of the block diagrams, schematic diagrams or flowcharts, as well as combinations of blocks or steps, can be implemented by special purpose hardware-based computer systems, or combinations of special purpose hardware and computer instructions, that perform the specified functions or steps.

As an example, provided for purposes of illustration only, a data input software tool of a search engine application can be a representative means for receiving a query including one or more search terms. Similar software tools of applications, or implementations of embodiments of the present invention, can be means for performing the specified functions. For example, an embodiment of the present invention may include computer software for interfacing a processing element with a user-controlled input device, such as a mouse, keyboard, touchscreen display, scanner, or the like. Similarly, an output of an embodiment of the present invention may include, for example, a combination of display software, video card hardware, and display hardware. A processing element may include, for example, a controller or microprocessor, such as a central processing unit (CPU), arithmetic logic unit (ALU), or control unit.

The many features and advantages of the invention are apparent from the detailed specification, and thus, it is intended by the appended claims to cover all such features and advantages of the invention which fall within the true spirit and scope of the invention. Further, since numerous modifications and variations will readily occur to those skilled in the art, it is not desired to limit the invention to the exact construction and operation illustrated and described, and accordingly, all suitable modifications and equivalents may be resorted to, falling within the scope of the invention.

## Claims

1. A computer-implemented method of dynamically producing an information object based on an optimized diagnostic test sequence, comprising:
reading an optimized diagnostic test sequence related to a symptom, the diagnostic test sequence including a first diagnostic test; and
associating a first information segment with the first diagnostic test.

2. The computer-implemented method of claim 1, further comprising identifying the first information segment as being related to the first diagnostic test.

3. The computer-implemented method of claim 1, further comprising creating an information data structure based at least in part on a fault taxonomy.

4. The computer-implemented method of claim 1, further comprising creating an information data structure based at least in part on the diagnostic test sequence, wherein at least one of a plurality of information segments is associated with each of a plurality of diagnostic tests in the sequence.

5. The computer-implemented method of claim 1, further comprising appending a procedure of the first diagnostic test to the diagnostic data structure.

6. The computer-implemented method of claim 1, wherein the first information segment comprises at least a portion of one selected from the following: an operation manual, a repair manual, a maintenance manual, an illustrated parts catalog, a component maintenance manual, a technical service bulletin, a recommended maintenance schedule, a technical drawing, a wiring diagram, a diagnostic schematic, a component description, a photograph, a vehicle maintenance record, a service center maintenance record, and a manufacturer warranty record and a failure mode and affects analysis.

7. The computer-implemented method of claim 1, wherein the first information segment comprises at least one selected from the following: an estimated time required to perform the first diagnostic test, a difficulty of performing the first diagnostic test, an estimated time required to remove and replace a component, a difficulty of removing and replacing the component, an availability of a replacement component, an estimated cost of the component, an estimated cost per time unit of labor, empirical data regarding a probability that a failure mode exists given the existence of the symptom, an estimate of the probability that the failure mode exists given the existence of the symptom, a frequency of the failure mode, a vehicle mileage, a vehicle configuration, and a vehicle modification.

8. The computer-implemented method of claim 1, wherein the diagnostic test sequence is further related to a vehicle.

9. A computer program product for dynamically producing an information object based on an optimized diagnostic test sequence, comprising a computer-readable medium encoded with instructions configured to be executed by a processor in order to perform predetermined operations comprising:
reading an optimized diagnostic test sequence related to a symptom, the diagnostic test sequence including a first diagnostic test; and
associating a first information segment with the first diagnostic test.

10. The computer program product of claim 9, wherein the predetermined operations further comprise identifying the first information segment as being related to the first diagnostic test.

11. The computer program product of claim 9, wherein the predetermined operations further comprise creating an information data structure based at least in part on a fault taxonomy.

12. The computer program product of claim 9, wherein the predetermined operations further comprise creating an information data structure based at least in part on the diagnostic test sequence, wherein at least one of a plurality of information segments is associated with each of a plurality of diagnostic tests in the sequence.

13. The computer program product of claim 9, wherein the predetermined operations further comprise appending a procedure of the first diagnostic test to the diagnostic data structure.

14. The computer program product of claim 9, wherein the first information segment comprises at least a portion of one selected from the following: an operation manual, a repair manual, a maintenance manual, an illustrated parts catalog, a component maintenance manual, a technical service bulletin, a recommended maintenance schedule, a technical drawing, a wiring diagram, a diagnostic schematic, a component description, a photograph, a vehicle maintenance record, a service center maintenance record, and a manufacturer warranty record and a failure mode and affects analysis.

15. The computer program product of claim 9, wherein the first information segment comprises at least one selected from the following: an estimated time required to perform the first diagnostic test, a difficulty of performing the first diagnostic test, an estimated time required to remove and replace a component, a difficulty of removing and replacing the component, an availability of a replacement component, an estimated cost of the component, an estimated cost per time unit of labor, empirical data regarding a probability that a failure mode exists given the existence of the symptom, an estimate of the probability that the failure mode exists given the existence of the symptom, a frequency of the failure mode, a vehicle mileage, a vehicle configuration, and a vehicle modification.

16. The computer program product of claim 9, wherein the diagnostic test sequence is further related to a vehicle.

17. A diagnostic tool for dynamically producing an information object based on an optimized diagnostic test sequence, comprising:
a diagnostic test sequence reader configured to read an optimized diagnostic test sequence related to a symptom, the diagnostic test sequence including a first diagnostic test; and
an information associator configured to associate a first information segment with the first diagnostic test.

18. The diagnostic tool of claim 17, wherein the information associator is further configured to identify the first information segment as being related to the first diagnostic test.

19. The diagnostic tool of claim 17, wherein the information associator is further configured to create an information data structure based at least in part on a fault taxonomy.

20. The diagnostic tool of claim 17, wherein the information associator is further configured to create an information data structure based at least in part on the diagnostic test sequence, wherein at least one of a plurality of information segments is associated with each of a plurality of diagnostic tests in the sequence.

21. The diagnostic tool of claim 17, wherein the information associator is further configured to append a procedure of the first diagnostic test to the diagnostic data structure.

22. The diagnostic tool of claim 17, wherein the first information segment comprises at least a portion of one selected from the following: an operation manual, a repair manual, a maintenance manual, an illustrated parts catalog, a component maintenance manual, a technical service bulletin, a recommended maintenance schedule, a technical drawing, a wiring diagram, a diagnostic schematic, a component description, a photograph, a vehicle maintenance record, a service center maintenance record, and a manufacturer warranty record and a failure mode and affects analysis.

23. The diagnostic tool of claim 17, wherein the first information segment comprises at least one selected from the following: an estimated time required to perform the first diagnostic test, a difficulty of performing the first diagnostic test, an estimated time required to remove and replace a component, a difficulty of removing and replacing the component, an availability of a replacement component, an estimated cost of the component, an estimated cost per time unit of labor, empirical data regarding a probability that a failure mode exists given the existence of the symptom, an estimate of the probability that the failure mode exists given the existence of the symptom, a frequency of the failure mode, a vehicle mileage, a vehicle configuration, and a vehicle modification.

24. The diagnostic tool of claim 17, wherein the diagnostic test sequence is further related to a vehicle.

25. A diagnostic tool for dynamically producing an information object based on an optimized diagnostic test sequence, comprising:
means for reading an optimized diagnostic test sequence related to a symptom, the diagnostic test sequence including a first diagnostic test; and
means for associating a first information segment with the first diagnostic test.

26. The diagnostic tool of claim 25, further comprising means for identifying the first information segment as being related to the first diagnostic test.

27. The diagnostic tool of claim 25, further comprising means for creating an information data structure based at least in part on a fault taxonomy.

28. The diagnostic tool of claim 25, further comprising means for creating an information data structure based at least in part on the diagnostic test sequence, wherein at least one of a plurality of information segments is associated with each of a plurality of diagnostic tests in the sequence.

29. The diagnostic tool of claim 25, further comprising means for appending a procedure of the first diagnostic test to the diagnostic data structure.

30. The diagnostic tool of claim 25, wherein the first information segment comprises at least a portion of one selected from the following: an operation manual, a repair manual, a maintenance manual, an illustrated parts catalog, a component maintenance manual, a technical service bulletin, a recommended maintenance schedule, a technical drawing, a wiring diagram, a diagnostic schematic, a component description, a photograph, a vehicle maintenance record, a service center maintenance record, and a manufacturer warranty record and a failure mode and affects analysis.

31. The diagnostic tool of claim 25, wherein the first information segment comprises at least one selected from the following: an estimated time required to perform the first diagnostic test, a difficulty of performing the first diagnostic test, an estimated time required to remove and replace a component, a difficulty of removing and replacing the component, an availability of a replacement component, an estimated cost of the component, an estimated cost per time unit of labor, empirical data regarding a probability that a failure mode exists given the existence of the symptom, an estimate of the probability that the failure mode exists given the existence of the symptom, a frequency of the failure mode, a vehicle mileage, a vehicle configuration, and a vehicle modification.

32. The diagnostic tool of claim 25, wherein the diagnostic test sequence is further related to a vehicle.
